# FASCICULE DE BREVET EUROPEEN

(11) **EP 0 816 972 B1**
(45) Date de publication et mention de la délivrance du brevet: **16.04.2008**
(21) Numéro de dépôt: 97401315.3
(22) Date de dépôt: 11.06.1997
(51) Int. Cl.: G06F 21/00

(54) **Lanceur d'applications sécurisé à interface graphique**
Gesicherter Lancierer für Anwendungen mit graphischer Schnittstelle
Secure launcher for applications with graphical interface

(30) Priorité: 01.07.1996 FR 9608161
(43) Date de publication de la demande: 07.01.1998
(73) Titulaire: BULL S.A., 78430 Louveciennes (FR)
(72) Inventeur: Selles, Gérard, 78113 Adainville (FR)
(74) Mandataire: Pellegrini, Marie Claude

(56) Documents cités:
- EP-A- 0 398 645
- EP-A- 0 421 409
- EP-A- 0 456 386
- EP-A- 0 561 509
- SALVADOR A C ET AL: "A TASK-BASED, GRAPHICAL USER INTERFACE FOR NETWORK MANAGEMENT" PROCEEDINGS OF THE NETWORK OPERATIONS AND MANAGEMENT SYMPOSIUM (NOM, KISSIMMEE, FEB. 14 - 17, 1994, vol. 2 OF 3, 14 février 1994, INSTITUTE OF ELECTRICAL AND ELECTRONICS ENGINEERS, pages 681-690, XP000452385

## Description

La présente invention concerne un lanceur d'applications sécurisé à interface graphique pour une plate-forme informatique constituée d'un réseau de machines sur lesquelles tournent une pluralité d'applications hétérogènes.

Dans la pratique courante actuelle, les plates-formes informatiques utilisées sont de plus en plus complexes. Elles se composent d'une pluralité de machines de types divers (de constructeurs différents) et de tailles différentes (petits, moyens, gros ordinateurs), possédant des protocoles de communication tant internes qu'externes de nature différente, et reliées entre elles par un réseau.

Ces plates - formes sont des systèmes qui, le plus souvent, sont "orientés vers la production" (en anglais "production oriented systems"). A ce titre, ils ont la même fonction que les grandes unités de traitement (en anglais, "mainframes") traditionnelles des grands constructeurs informatiques. Cela signifie qu'elles doivent exercer un haut niveau de contrôle sur les requêtes de services que demande le client - utilisateur (en anglais "customer service requests").

### LE PROBLEME POSE

Lorsque l'on cherche à lancer une application destinée à tourner sur une telle plate-forme, les problèmes suivants se posent:
1) L'utilisateur qui veut lancer l'application est-il habilité à le faire?
2) Dans le cas d'un grand nombre d'applications qui sont à sa disposition, et en fonction du travail qu'il veut accomplir, il peut rencontrer de grandes difficultés à retrouver l'application la mieux appropriée à cette tâche. De ce fait, il est indispensable de pouvoir les classifier aisément par domaines d'activité (ce que l'homme de l'art appelle "métiers").
3) La mémorisation des commandes de lancement des applications par l'utilisateur est source d'erreur du fait de la syntaxe relativement complexe de ces commandes.

### LES SOLUTIONS DE L'ART ANTERIEUR

Dans le cas des plates-formes tournant sous le système d'exploitation de type UNIX, il existe essentiellement deux modes de lancement d'applications.

Le premier dit mode ligne résoud le premier problème sans permettre la délégation, c'est-à-dire la possibilité de donner à un utilisateur ayant des droits d'accès réduits de lancer une application à laquelle il n'a normalement pas droit.

Le second dit mode graphique résout le premier problème de la même manière que le mode ligne et en plus résout le troisième.

Le brevet EP 0421 409 décrit un système de sécurité utilisait plus particulièrement une carte IC afin d'augmenter les fonctions de sécurité. Par ailleurs, ce système comporte également un système d'autorisation d'accès aux applications dans lequel des droits d'habilitation sont délégués aux utilisateurs, et dans lequel le lancement d'une application n'est permis que si l'utilisateur possède des droits d'habilitation valables.

Le brevet EP 0 561 509 décrit un système informatique accessible à une pluralité d'utilisateurs et ayant une pluralité de ressources protégées, où les utilisateurs peuvent avoir accès à une ressource protégée seulement par instruction d'un administrateur, et où l'administrateur contrôle que les conditions prédéterminées sont satisfaites avant la permission à l'accès de la ressource protégée.

Le brevet EP 0 456 386 décrit une méthode et un dispositif pour contrôler l'accès des utilisateurs aux programmes des applications d'un système informatique en réseau. Le système inclut une unité d'authentification afin d'authentifier un utilisateur et de délivrer cet utilisateur un certificat d'attribution de privilèges qui peut être présenté comme une preuve de droits d'accès et permettre à l'utilisateur qui présente ce certificat d'avoir accès à l'application.

Le brevet EP 0 398 645 décrit un système de contrôle de privilèges permettant l'accès à des données dans un système de traitement de données.

Le document intitulé "A Task-based, graphical user interface for network management" de Salvador A.C. et al publié dans "Proceedings of the network operations and management symposium" du 14 au 17 février 1994 décrit une interface graphique pour une plate-forme informatique à réseau qui permet d'organiser, d'avoir accès et de gérer des informations.

Cependant, ces différents systèmes ne permettent pas une classification des applications et par conséquent, ne répondent pas aux trois problèmes posés simultanément.

### L'OBJET DE L'INVENTION

La présente invention a précisément pour objet de résoudre les trois problèmes simultanément en offrant un lanceur sécurisé d'applications à interface graphique permettant d'une part la délégation et d'autre part une classification arborescente à la convenance de l'utilisateur.

L'invention concerne le lanceur sécurisé d'applications tel que revendiqué en revendication indépendante.

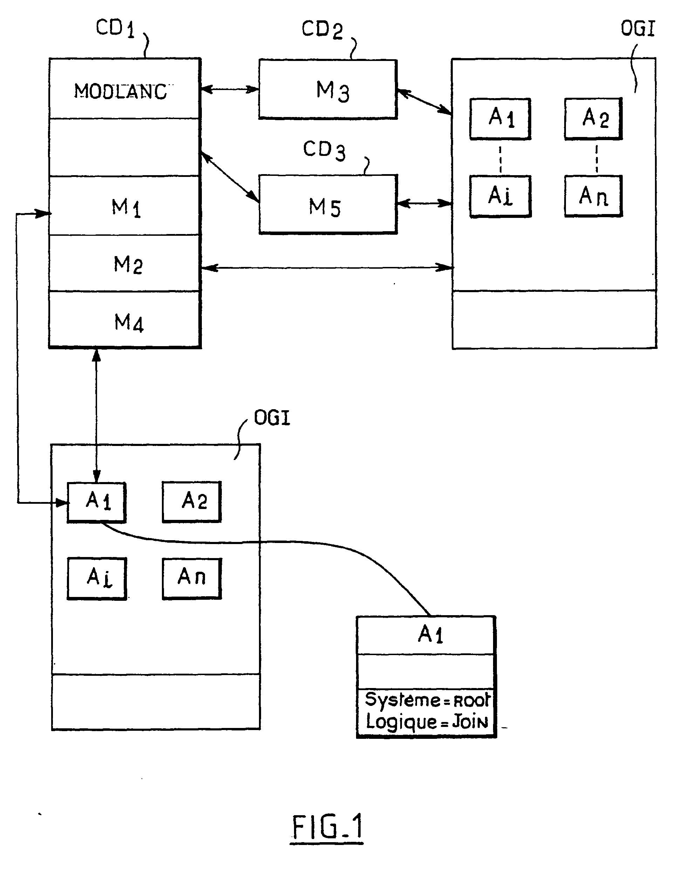

Les caractéristiques et avantages de l'invention ressortiront de la description qui suit, donnée à titre d'exemple et illustrée dans la figure 1 annexée qui représente les principaux éléments constitutifs du lanceur d'applications selon l'invention.

### DESCRIPTION D'UN EXEMPLE DE REALISATION DE L'INVENTION

Le lanceur LAP selon l'invention appartient donc à une plate-forme informatique PL complexe qui comprend des machines Mi reliées entre elles par un réseau RE. La structure de telles plates-formes est parfaitement connue et est par exemple décrite dans le brevet US 5797006 intitulé "Architecture d'habillage d'applications pour une plate-forme informatique".

Dans la suite du texte, on supposera que la plate-forme PL tourne avec un système d'exploitation (operating system, en anglais) de type UNIX (marque déposée).

Le lanceur LAP peut être considéré comme un terminal de PL à partir duquel tout utilisateur, humain par exemple, peut lancer n'importe quelle application qu'il veut faire tourner sur l'une quelconque des machines Mi.

Les différents éléments constitutifs du lanceur LAP sont :
- les moyens MLA de lancement d'applications comprenant, l'interface graphique OGI, des moyens d'autorisation de lancement AUTLANC, et un module de lancement d'applications MODLANC,
- les moyens MEMO de mémorisation des commandes de lancement,
- les moyens MODPRIV d'acquisition de privilèges.

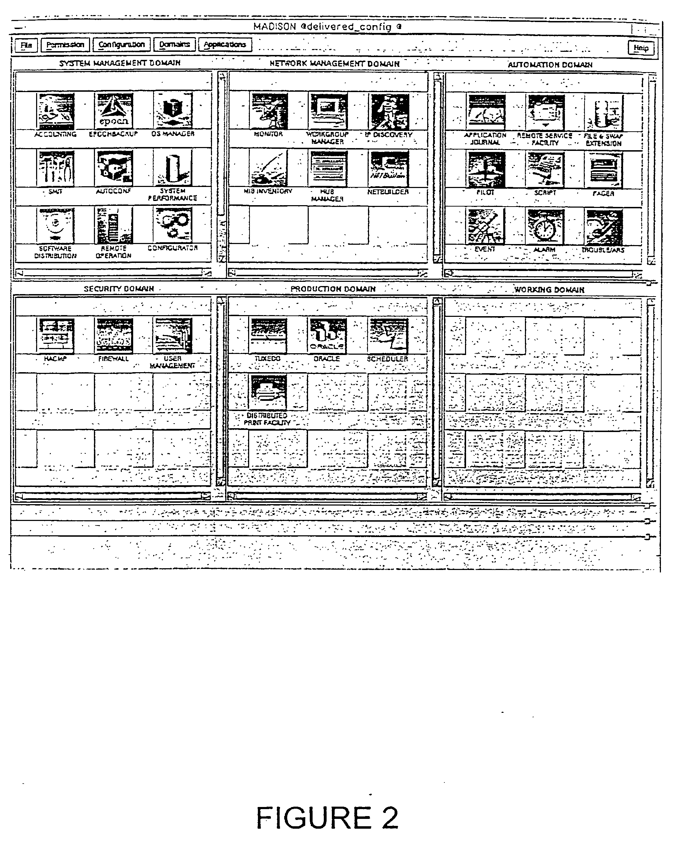

L'interface graphique OGI permet à l'utilisateur (l'opérateur humain, par exemple) de sélectionner aisément une application quelconque parmi une pluralité, grâce à la partie "présentation" de l'application qui établit une liaison visuelle biunivoque entre l'image décelée par l'utilisateur sur l'écran SCR de l'interface et le titre de l'application, lui-même supposé le plus représentatif possible du contenu de l'application. Ainsi, l'image perçue sur l'écran symbolise l'application et l'utilisateur peut interpréter aisément ce que signifie l'image. On pourra mieux s'en rendre compte en se référant notamment aux figures 2 à 4, décrites plus en détail à la fin de la description.

OGI comporte donc un logiciel PRES de présentation des applications. Ce logiciel est en relation par une liaison appropriée avec une souris S qui permet de provoquer des événements extérieurs. La souris S est par exemple du type à trois boutons. Les événements extérieurs provenant de la souris sont traités par une interface souris pré programmée incorporée au logiciel PRES et qui est susceptible en outre de reconnaître l'appui, le relâchement d'un bouton, la traîne de la souris, et des événements logiques tels que l'entrée du pointeur dans une fenêtre W ou un champ F représentés sur écran. Sur l'écran, la position du pointeur de la souris est repérée par une petite flèche dirigée vers le haut. Bien entendu, sans sortir du cadre de l'invention, la souris pourrait être remplacée par tout autre dispositif de pointage tel qu'un crayon optique ou une table graphique. Enfin, en complément de l'interface souris, on prévoit également un interface pour un clavier CL programmé autant pour les touches de caractères que celles de contrôles et celles de pointeurs, de façon à pouvoir entrer dans le mode édition les informations qui correspondent à différentes zones de différentes fenêtres. Le logiciel de présentation PRES permet l'affichage des fenêtres et l'exécution d'actions sélectionnées sur des boutons de commande d'une fenêtre à la suite du déclenchement d'un événement extérieur, tel par exemple l'actionnement d'un bouton souris. Dans la suite du texte, il sera implicite que toute opération de lancement d'applications le sera par l'intermédiaire de la souris et/ou du clavier.

La visualisation des fenêtres se fait au moyen d'une interface graphique de type X/Motif (marque déposée).

Il est clair que les techniques d'utilisation d'une souris ou d'un clavier et plus généralement d'une interface graphique sont parfaitement connues de l'homme du métier.

L'interface graphique est adaptable et le tableau de bord BO de celle-ci (forme sous laquelle apparaissent les images sur l'écran) peut être redéfini autant de fois que souhaité et l'on peut passer d'un tableau de bord à un autre, à tout instant, selon le désir et les besoins de l'utilisateur. La forme d'un tableau de bord déterminé s'appelle configuration CONFIG.

Par extension et généralisation de langage, on appellera sous le même vocable générique d'interface graphique OGI, l'ensemble formé par l'écran SCR, le logiciel PRES, la souris S, le clavier CL et le tableau de bord BO.

A un tableau de bord donné, on peut faire correspondre un ensemble d'applications correspondant à un domaine d'utilisation déterminé. Sur l'écran, les applications apparaissent sous forme d'une case de forme carrée à l'intérieur de laquelle apparaît un dessin qui est une métaphore représentative de l'objet de l'application, le titre de cette dernière apparaissant au-dessous du dessin.

Des exemples de tableaux de bord avec des noms d'applications correspondants apparaissent dans les figures 2 à 8 et seront plus particulièrement décrits plus loin, en liaison avec une analyse plus précise de celles-ci.

Sur certains des tableaux de bords apparaissent des cases vides : ceci permet à l'utilisateur d'ajouter ou de retrancher à volonté des applications dans le domaine correspondant au tableau de bord associé.

De manière connue, toute application est lancée au moyen de commandes spécifiques de lancement qui sont mémorisées dans une mémoire MEMO disposée par exemple à l'intérieur du terminal constitué par OGI. Les commandes de lancement sont cachées à l'utilisateur courant et ne sont connues que de l'administrateur et de ce fait seulement modifiable par lui. L'administrateur est une personne (humaine uniquement) qui a en charge l'organisation et la gestion de la plate-forme PL. Il est habilité à attribuer à chacun des utilisateurs finaux appelés également utilisateurs courants (current users en anglais) les domaines d'activité et les applications auxquels chacun de ceux-ci aura accès.

Ces commandes de lancement d'une application sont mises en oeuvre par le module de lancement MODLANC qui tourne en permanence en un endroit quelconque de la plate-forme (sur une machine Mi quelconque).

### L'IDEE DE BASE DE L'INVENTION :

### LA DELEGATION

La condition essentielle que doit satisfaire le lanceur selon l'invention est la sécurité, ce qui signifie que, pour lancer, enlever, ajouter, modifier une application quelconque, une seule personne peut le faire, à condition qu'elle soit dûment mandatée, c'est-à-dire qu'elle ait reçu une délégation en ce sens.

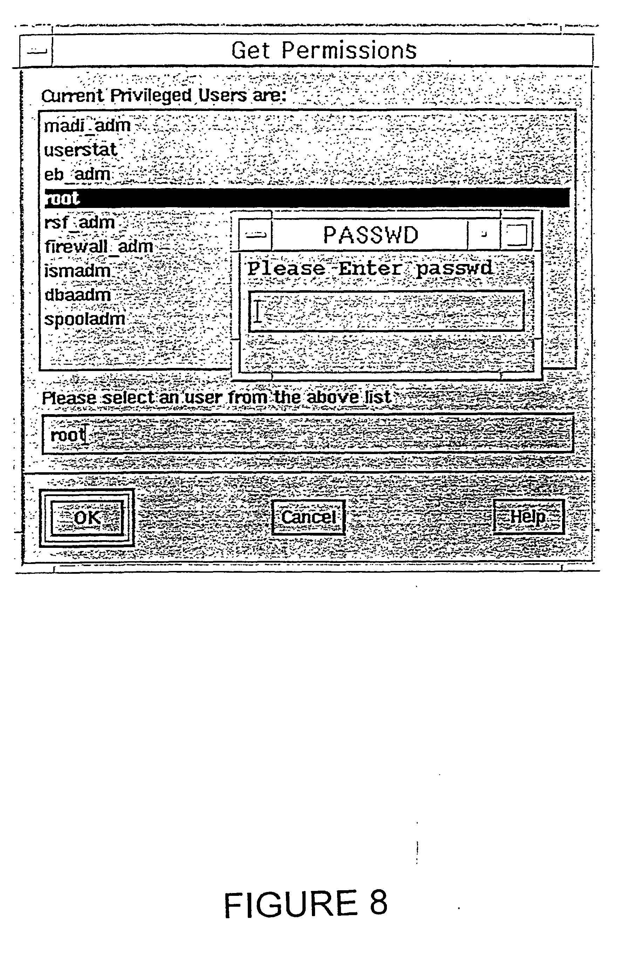

Cette délégation est basé sur les deux caractéristiques essentielles suivantes :
1) l'utilisateur du système d'exploitation UNIX a le droit de lancer une commande,
2) un second utilisateur déterminé reçoit délégation pour lancer une commande.
A chacune de ces deux caractéristiques correspondent respectivement un mot de passe (password, en anglais), à savoir:
1) un mot de passe "système" qui définit le nom de l'utilisateur réclamé par le système d'exploitation, par exemple le mot "root" que l'on peut voir afficher sur l'écran reproduit à la figure 8 auquel correspond un privilège donné, tel que le privilège maximum, un tel mot étant rentré par l'administrateur de la plate-forme à partir de OGI. De tous les utilisateurs, c'est celui qui a le maximum de pouvoirs, autrement dit qui possède le privilège maximum.
2) un mot de passe dit "Logique" qui définit un nom d'utilisateur quelconque qui a le droit de lancer une application donnée en se présentant comme utilisateur du système. On dit alors qu'il a reçu délégation pour exécuter l'application.

**Ce sont ces deux mots de passe qui définissent la délégation.**

C'est sur la base de ces deux caractéristiques essentielles auxquelles sont associées les deux mots de passe, que fonctionnent les moyens AUTLANC d'autorisation de lancement d'une application.

On considère la figure 1.

Les éléments essentiels constituant les moyens AUTLANC sont les suivants :
- le module de contrôle d'habilitation M2,
- le module d'acquisition d'habilitation M3,
- le module de soumission d'exécution M5.

Le module de contrôle d'habilitation M2 permet ou interdit à l'utilisateur courant (celui auquel correspond le mot de passe "Logique") d'exécuter une application.

Le module d'acquisition M3 permet à l'utilisateur courant de lever un refus d'exécution qui lui a été opposé, en lui proposant de répondre à un mot de passe "Logique".

Il convient de préciser que le module de lancement MODLANC tient à jour la liste des permissions acquises par les différents utilisateurs courants lors de la session en cours : ces permissions sont délivrées par un module M1 de définition de délégation dont le rôle sera défini plus loin de manière plus précise. Elles sont mémorisées en un endroit quelconque du système.

Le mode suivant lequel l'autorisation de lancement d'une application est effectué, est fonction de la combinaison des deux mots de passe "Logique" et "système". Celle-ci est explicitée par le tableau suivant :

| Mot de passe "système" | Mot de passe "Logique" | Mot de passe exigé | Commentaires |
|---|---|---|---|
| × | × | "Logique" | L'utilisateur "Logique" est habilité à utiliser cette application. Au niveau du système d'exploitation, cette application peut exiger des droits supérieurs à ceux attribués à l'utilisateur "Logique". |
| - | × | "Logique" | L'utilisateur "Logique" est seul habilité à exécuter cette application qui ne requiert aucun droit au niveau du système d'exploitation |
| × | - | "Système" | L'utilisateur courant ne pourra exécuter cette application que s'il connaît le mot de passe "Système". |
| - | - | Aucun | N'importe qui peut exécuter cette application |

En considérant le tableau précédent, dans les cas 1 et 3 qui apparaissent aux première et troisième ligne de celui-ci, c'est le module M5 de soumission d'exécution qui permet à l'utilisateur courant d'être présenté au système d'exploitation en lieu et place de l'utilisateur système.

Il convient de préciser que seul le module de lancement d'applications MODLANC est autorisé à activer le module M5, un protocole d'authentification étant établi entre eux.

De la même façon, deux protocoles d'authentification sont établis entre MODLANC et M2, l'un à l'aller ce qui signifie que seul MODLANC peut activer M2, l'autre au retour ce qui signifie que MODLANC est averti que M2 a réussi ou échoué dans son contrôle.

Ainsi, on peut voir que les modules M2 et M5 ne sont activables que depuis le module de lancement MODLANC.

A tout moment, l'administrateur de la plate-forme peut supprimer une délégation, cette suppression prenant effet à la prochaine demande d'exécution de l'application qui suit immédiatement dans le temps celle qui est en cours d'exécution.

Les modules M1 et M4 constituent les moyens d'acquisition de privilèges.

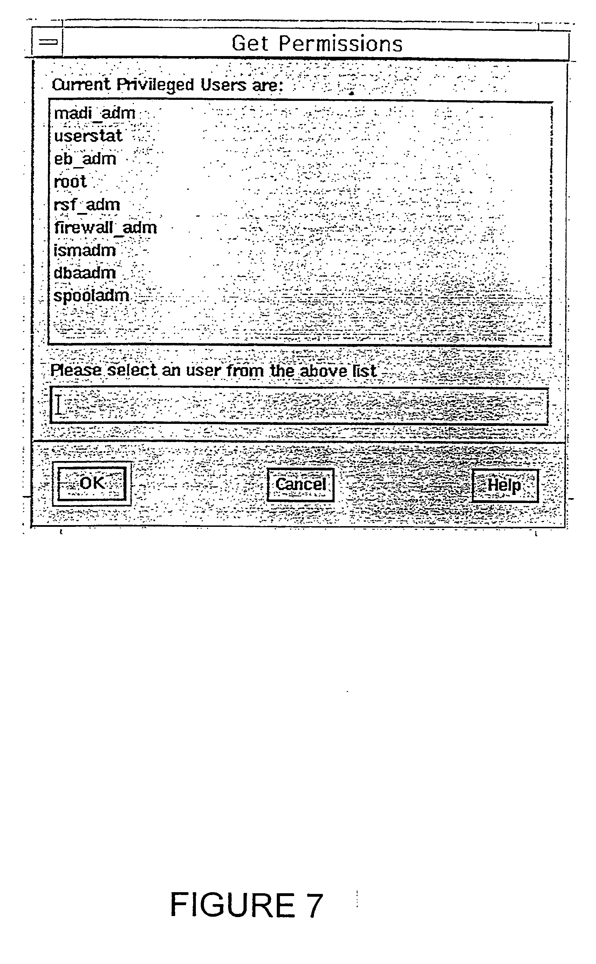

Le module M1 appelé module de définition de délégation se rapporte à la présentation des différents utilisateurs privilégiés et à l'amorce du dialogue qui permet à un utilisateur d'acquérir une délégation. De ce fait, le module M1 appelle le module M2. Ce module correspond à la fonction appelée "Get Permissions" qui est explicitée plus loin en relation avec la description des figures 7 et 8.

Le module M4 se rapporte au retrait partiel ou total des délégations acquises grâce aux modules M1 et M2 ce qui correspond respectivement aux fonctions "Deny Permissions" et "Deny All Permissions", également explicitées plus loin dans le cadre de la description des figures 7 et 8.

Ainsi qu'on peut le voir à la figure 1, les modules MODLANC, M1, M2, M4, sont rassemblés dans un même code CD1, alors que les modules M3 et M5 appartiennent respectivement aux codes CD2 et CD3. Les interactions entre le module MODLANC et les modules M3 et M5 sont représentées par des flèches à double sens.

L'interface OGI est symbolisée par un écran rectangulaire sur lequel on a fait figurer les applications A1, A2, Ai, An sous forme de rectangles. En bas de cette même figure, on a symbolisé par des flèches à double sens les relations entre les modules M1 et M4 qui ont pour effet de modifier les privilèges de l'utilisateur de l'application A1, pour laquelle on a fait apparaître les deux mots de passe "Système" et "Logique" (en bas et à droite de la figure).

Pour mieux illustrer comment l'utilisateur courant peut travailler de manière conviviale avec le lanceur d'applications selon l'invention, on se reportera aux figures 2 à 8 qui sont brièvement décrites ci-dessous.

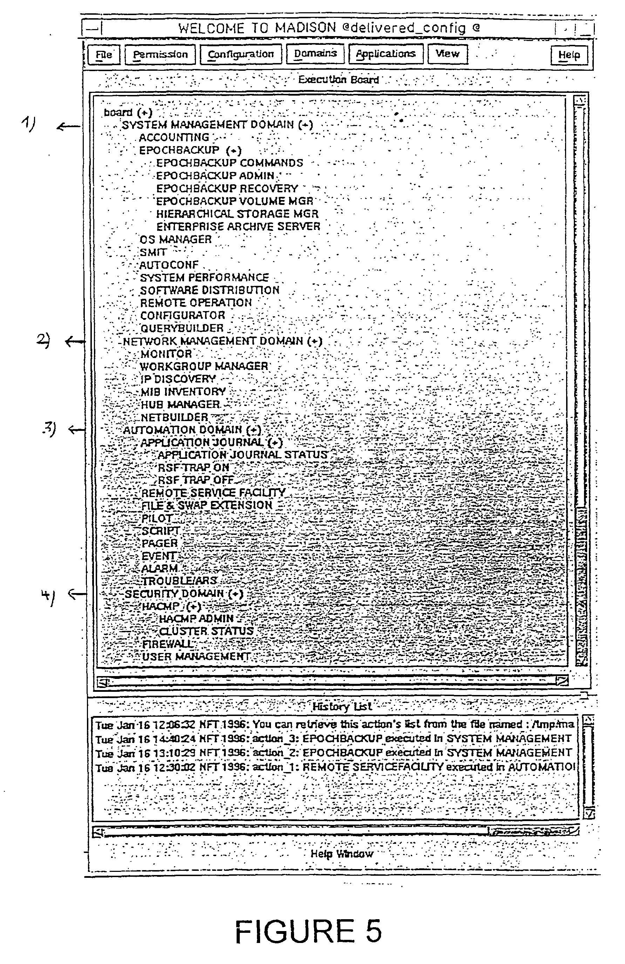

Pour utiliser l'interface graphique OGI du lanceur LAP selon l'invention, afin de lancer une application quelconque, l'administrateur dispose de deux modes de travail différents, tout en sachant qu'il peut basculer comme il l'entend d'un mode à l'autre à tout moment :
a) un premier mode dit conventionnel permettant à l'utilisateur de naviguer à travers une pluralité de fenêtres en cascade (figures 2 à 4).
b) un second mode à une seule fenêtre (figure 5) dans lequel toutes les applications sont représentées le long d'un arbre unique permettant d'accéder directement à une application en cliquant une seule fois sur la souris S.

Si l'on considère les figures 2 à 4 qui montrent comment apparaissent les informations sur l'écran SCR pour l'utilisateur humain dans le cas où ce dernier a choisi le mode conventionnel, on peut voir en haut et à gauche de l'écran une barre de menu contenant un certain nombre d'options, à savoir, de gauche à droite :
- File = Fichier,
- Permission = autorisation,
- Configuration = configuration,
- Domains = Domaines des applications,
- Applications = Applications à l'intérieur d'un même domaine.

En-dessous de la barre de menu, apparaissent six domaines d'applications, dont chacun contient neuf cases carrées qui, soit sont vides, soit contiennent un graphisme représentant de manière évidente pour l'utilisateur la nature de l'application.

Comme on peut le lire sur la figure 2, ces différents domaines sont les suivants :
- System Management Domain = Domaine de gestion de système,
- Network Management Domain = Domaine de gestion de réseau,
- Automation Domain = Domaine d'automatisation,
- Security Domain = Domaine de sécurité,
- Production Domain = Domaine de production,
- Working Domain = Domaine de travail,

Ainsi qu'on peut le voir sur la figure 2, le domaine de travail ne comporte que des cases vides : ce domaine est prévu pour que l'utilisateur puisse y intégrer ses propres applications mais il doit être parfaitement clair qu'il peut également les intégrer dans tout autre domaine à sa convenance. Le Domaine de gestion de système comporte 9 cases pleines correspondant à neuf applications disponibles, le Domaine de gestion de réseau, six cases pleines et ainsi de suite.

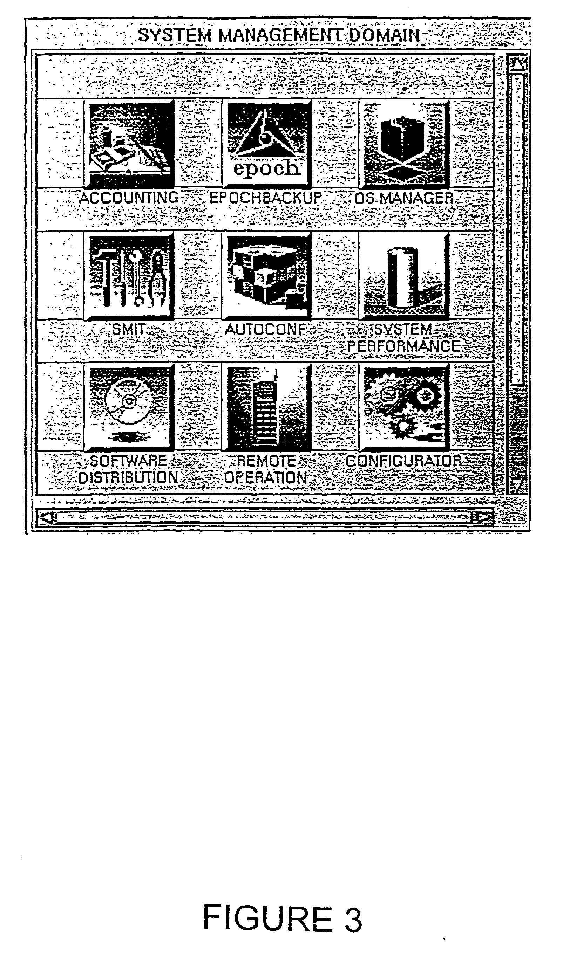

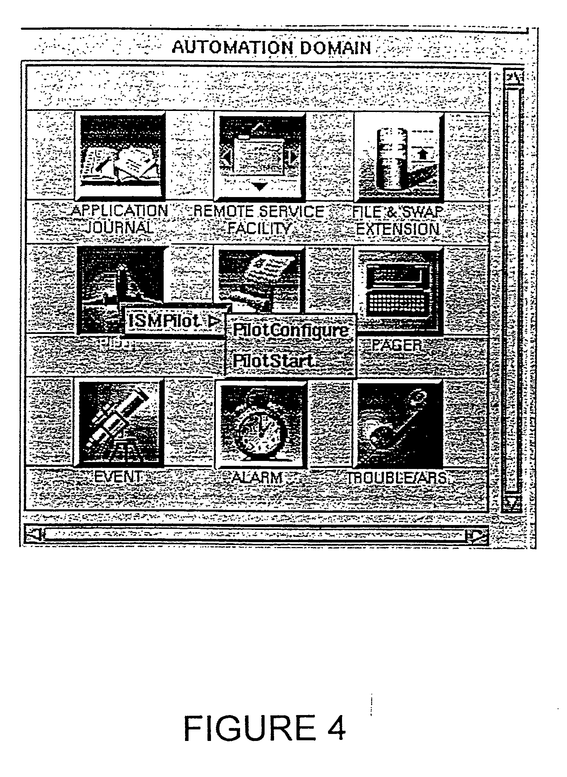

Si l'on se reporte aux figures 3 et 4, on voit respectivement de manière plus précise chacun des domaines "System Management Domain" et Automation Domain". Le premier d'entre eux comporte neuf applications dénommées successivement "ACCOUNTING", EPOCHBACKUP", "OS MANAGER", "SMIT", etc.. , le second en comportant également neuf, à savoir "APPLICATION JOURNAL", "REMOTE SERVICE FACILITY", "FILE AND SWAP EXTENSION", "PILOT", etc.

Si l'on se reporte à la figure 5, on voit ce qui apparaît sur l'écran, lorsque l'utilisateur a choisi le second mode à arbre unique.

On y voit apparaître les quatre premiers domaines mentionnés plus haut, appelés 1 à 4 à la figure 5, et on peut observer que, pour chacun d'entre eux, le nom des applications qu'ils contiennent correspond bien à chacun des noms que l'on peut voir aux figures 2 à 4.

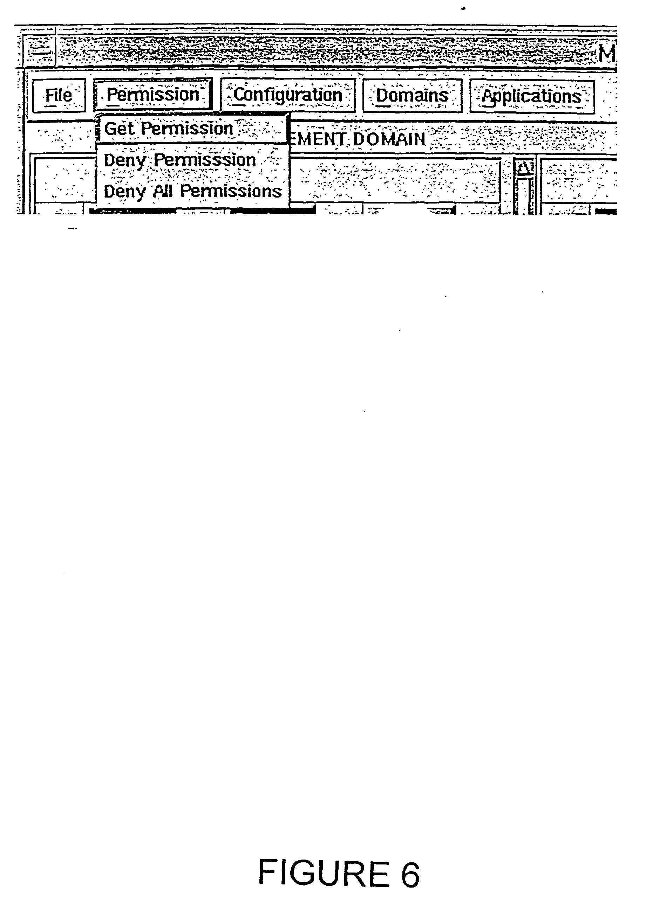

On considère la figure 6. Si l'on clique au moyen de la souris S sur l'option "PERMISSION" de la barre de menu figurant dans la partie supérieure de l'écran on voit apparaître sur l'écran, le menu dit d'autorisation qui comporte successivement les options, "Get Permission", "Deny Permission", "Deny All Permissions"

Si l'on clique sur l'option "Get Permission", on voit sur SCR les informations montrées à la figure 7. L'utilisateur voit alors s'afficher en haut de l'écran le nom des utilisateurs courants privilégiés (9 noms en haut de l'écran, dont "root", appelés "current privileged users" en anglais). En cliquant sur le nom de l'utilisateur choisi, ici "root", on voit alors apparaître sur SCR les informations de la figure 8 où l'on voit apparaître la nécessité d'entrer un mot de passe (password, en anglais) à l'intérieur du rectangle situé en milieu d'écran qui comporte l'indication "PASSWD" placée en haut du rectangle, et l'instruction en langue anglaise "please enter password" ("entrer mot de passe, S.V.P.").

Dès que ce mot de passe est introduit par l'utilisateur et que la combinaison des deux mots de passe est validée, l'utilisateur peut alors lancer l'application.

L'utilisateur peut comme il l'entend, soit sélectionner en premier lieu l'application qu'il entend faire tourner et ensuite acquérir la délégation, soit faire l'inverse s'il a suffisamment de connaissances des applications qu'il peut faire tourner et des mots de passe qui concernent chacune d'entre elles, qu'il connaît ainsi d'avance.

## Revendications

1. Lanceur (LAP) sécurisé d'applications à interface graphique (OGI) pour une plate-forme (PL) informatique comportant une pluralité de machines (Mi) connectées en réseau (RE) sur lesquelles tournent un ensemble d'applications (A1 à An) hétérogènes et possédant un système d'exploitation déterminé, ledit lanceur comprenant :
- des moyens sécurisés de lancement d'applications (MLA) à interface graphique (OGI), lesdits applications étant lancées par des commandes spécifiques mémorisées dans une mémoire (MEMO),
- des moyens d'acquisition de privilèges (MODPRIV), propres à chaque application (Ai) pour déléguer à l'utilisateur des droits d'habilitation, lesdits droits d'habilitation étant vérifiés par les moyens d'autorisation de lancement (AUTLANC), permettant à l'utilisateur de lancer la dite application,
les moyens sécurisés de lancement (MLA) comportant en outre :
- des moyens d'autorisation de lancement (AUTLANC) ne permettant le lancement d'une application (Ai) que si l'utilisateur correspondant possède des droits d'habilitation valables,
**caractérisé en ce que** l'autorisation de lancement d'une application (Ai) est effectuée dès lors que combinaison de deux mots de passe l'un dit "système" et l'autre "Logique", introduits par ledit utilisateur est validée,
- le mot de passe "système" définissant le nom de l'utilisateur exigé par le dit système d'exploitation de la plate-forme (PL),
- le mot de passe dit "Logique" définissant un nom d'utilisateur quelconque qui a le droit de lancer une application donnée (Ai) en se présentant comme utilisateur de la plate-forme (PL).

2. Lanceur (LAP) d'applications selon la revendication 1, **caractérisé en ce que**, les moyens d'autorisation de lancement (AUTLANC) comprennent :
- un module de contrôle d'habilitation (M2),
- un module d'acquisition d'habilitation (M3),
- un module de soumission d'exécution (M5),
le module de contrôle d'habilitation (M2) permettant ou interdisant à l'utilisateur courant d'exécuter une application (Ai),
le module d'acquisition d'habilitation (M3) permettant à l'utilisateur courant de lever un refus d'exécution qui lui a été opposé, en lui proposant de répondre à un mot de passe "Logique",
le module de soumission d'exécution (M5) permettant à l'utilisateur courant d'être présenté au système d'exploitation en lieu et place de l'utilisateur système.

3. Lanceur (LAP) d'applications selon l'une des revendications 1, 2, **caractérisé en ce que** les moyens d'acquisition de privilèges (MODPRIV) comprennent :
- un module (M1) de définition de délégation qui concerne la présentation des différents utilisateurs privilégiés et l'amorce du dialogue qui permet à un utilisateur d'acquérir une délégation,
- un module (M4) qui concerne le retrait partiel ou total des délégations acquises grâce au module de définition de délégation (M1) et au module de contrôle d'habilitation (M2), le module de contrôle d'habilitation (M2) permettant ou interdisant à l'utilisateur courant d'exécuter une application (Ai).

4. Lanceur (LAP) d'applications selon l'une des revendications 1, 2, 3, **caractérisé en ce que**, l'interface graphique (OGI) comprenant un écran de visualisation (SCR), un logiciel (PRES) de présentation des applications en relation par une liaison appropriée avec une souris (S) agissant sur l'écran par l'intermédiaire d'un pointeur, un clavier (CL) programmé, il comprend des moyens de classification des applications comportant :
a) des premiers moyens dit conventionnels permettant à l'utilisateur de naviguer à travers une pluralité de fenêtres en cascade qui lui apparaissent sur l'écran (SCR) de l'interface graphique (OGI),
b) des second moyens à une seule fenêtre dans lequel toutes les applications sont représentées le long d'un arbre unique permettant d'accéder directement à une application en cliquant une seule fois sur la souris (S).

## Claims

1. Secure application launcher (LAP) with a graphic interface (OGI) for a computer platform (PL) comprising a plurality of machines (Mi) connected in a network (RE) on which a set of heterogeneous applications (A1 to An) run and having a given operating system, said launcher comprising:
- secure application launching means (MLA) with a graphic interface (OGI), said applications being launched by specific commands stored in a memory (MEMO),
- privilege acquisition means (MODPRIV), specific to each application (Ai) for delegating permission rights to the user, said permission rights being checked by the launching authorisation means (AUTLANC), allowing the user to launch said application,
the secure launching means (MLA) further comprising:
- launching authorisation means (AUTLANC) that allow an application (Ai) to be launched only if the corresponding user has valid permission rights,
**characterised in that** the authorisation to launch an application (Ai) is carried out as soon as the combination of two passwords, one called "system" and the other "Logic", entered by said user, has been validated,
- the "system" password defining the name of the user required by said operating system of the platform (PL),
- the "Logic" password defining the name of an unspecified user who has the right to launch a given application (Ai), presenting himself as a user of the platform (PL).

2. Application launcher (LAP) according to Claim 1, **characterised in that** the launching authorisation means (AUTLANC) comprise:
- a permission control module (M2),
- a permission acquisition module (M3),
- an execution submission module (M5),
the permission control module (M2) allowing or prohibiting execution of an application (Ai) by the current user,
the permission acquisition module (M3) allowing the current user to lift a refusal of execution that has been made against him, proposing that he should respond to a "Logic" password,
the execution submission module (M5) allowing the current user to be presented to the operating system in place of the system user.

3. Application launcher (LAP) according to one of Claims 1, 2, **characterised in that** the privilege acquisition means (MODPRIV) comprise:
- a delegation definition module (M1) that relates to the presentation of the various privileged users and the start of the dialogue that allows a user to acquire a delegation,
- a module (M4) that relates to the partial or total withdrawal of delegations acquired by the delegation definition module (M1) and by the permission control module (M2), the permission control module (M2) allowing or prohibiting execution of an application (Ai) by the current user.

4. Application launcher (LAP) according to one of Claims 1, 2, 3, **characterised in that**, the graphic interface (OGI) comprising a display screen (SCR), a piece of application presentation software (PRES) connected via a suitable connection to a mouse (S) acting on the screen via a pointer, a programmed keyboard (CL), it comprises application classification means including:
a) first means, said to be conventional, allowing the user to navigate through a plurality of cascaded windows that appear on the screen (SCR) of the graphic interface (OGI),
b) second means with a single window in which all the applications are represented along a single tree making it possible to access an application directly by clicking just once on the mouse (S).

## Patentansprüche

1. Gesicherte Anwendungsaktivierungseinrichtung (LAP) mit graphischer Schnittstelle (OGI) für eine Datenverarbeitungsplattform (PL), die mehrere über ein Netz (RE) verbundene Maschinen (Mi) umfasst, in denen eine Gesamtheit von heterogenen Anwendungen (A1 bis An) abläuft und die ein bestimmtes Betriebssystem besitzen, wobei die Aktivierungseinrichtung umfasst:
- gesicherte Anwendungsaktivierungsmittel (MLA) mit graphischer Schnittstelle (OGI), wobei die Anwendungen durch bestimmte Befehle, die in einem Speicher (MEMO) gespeichert sind, aktiviert werden,
- Privilegienerfassungsmittel (MODPRIV), die zu jeder Anwendung (Ai) gehören, um dem Anwender Befugnisrechte zu verleihen, wobei die Befugnisrechte durch Aktivierungsautorisierungsmittel (AUTLANC) verifiziert werden, damit der Anwender diese Anwendung aktivieren kann,
wobei die gesicherten Aktivierungsmittel (MLA) außerdem umfassen:
- Aktivierungsautorisierungsmittel (AUTLANC), die die Aktivierung einer Anwendung (Ai) nur zulassen, wenn der entsprechende Anwender gültige Befugnisrechte besitzt,
**dadurch gekennzeichnet, dass** die Autorisierung der Aktivierung einer Anwendung (Ai) ausgeführt wird, sobald die Kombination von zwei Passwörtern, wovon eines "System"-Passwort und das andere "Logik"-Passwort genannt wird, die vom Anwender eingegeben werden, für gültig erklärt wird,
- wobei das "System"-Passwort den Namen des Anwenders definiert, der von dem Betriebssystem der Plattform (PL) gefordert wird,
- wobei das so genannte "Logik"-Passwort einen Namen eines beliebigen Anwenders definiert, der das Recht hat, eine gegebene Anwendung (Ai) zu aktivieren, indem er sich als Anwender der Plattform (PL) ausgibt.

2. Anwendungsaktivierungseinrichung (LAP) nach Anspruch 1, **dadurch gekennzeichnet, dass** die Aktivierungsautorisierungsmittel (AUTLANC) umfassen:
- ein Befugniskontrollmodul (M2),
- ein Befugnis-Erfassungsmodul (M3),
- ein Ausführungs-Unterbreitungs-Modul (M5),
wobei das Befugniskontrollmodul (M2) dem momentanen Anwender ermöglicht oder verbietet, eine Anwendung (Ai) auszuführen,
wobei das Befugnis-Erfassungsmodul (M3) dem momentanen Anwender ermöglicht, eine Ausführungsverweigerung, die ihm entgegengehalten worden ist, aufzuheben, indem es ihm vorschlägt, auf ein "Logik"-Passwort zu antworten,
wobei das Ausführungs-Unterbreitungs-Modul (M5) dem momentanen Anwender ermöglicht, dem Betriebssystem statt des Systemanwenders präsentiert zu werden.

3. Anwendungsaktivierungseinrichtung (LAP) nach einem der Ansprüche 1 und 2, **dadurch gekennzeichnet, dass** die Privilegienerfassungsmittel (MODPRIV) umfassen:
- ein Übertragungsdefinitionsmodul (M1), das die Präsentation verschiedener privilegierter Anwender und den Beginn des Dialogs, der einem Anwender ermöglicht, eine Übertragung zu erlangen, betrifft,
- ein Modul (M4), das die teilweise oder vollständige Rücknahme von kraft des Übertragungsdefinitionsmoduls (M1) und des Befugniskontrollmoduls (M2) erlangten Übertragungen betrifft, wobei das Befugniskontrollmodul (M2) dem momentanen Anwender ermöglicht oder verbietet, eine Anwendung (Ai) auszuführen.

4. Anwendungsaktivierungseinrichtung (LAP) nach einem der Ansprüche 1, 2 und 3, **dadurch gekennzeichnet, dass** sie dann, wenn die graphische Schnittstelle (OGI) einen Anzeigeschirm (SCR), eine Software (PRES) für die Präsentation von Anwendungen in Bezug auf eine geeignete Verbindung mit einer auf dem Schirm über einen Zeiger wirkende Maus und eine programmierte Tastatur (CL) umfasst, Mittel zum Klassifizieren der Anwendungen umfasst, die enthalten:
a) erste so genannte herkömmliche Mittel, die dem Anwender ermöglichen, durch mehrere kaskadenartig angeordnete Fenster zu navigieren, die ihm auf dem Schirm (SCR) der graphischen Schnittstelle (OGI) angezeigt werden,
b) zweite Mittel mit nur einem einzigen Fenster, in dem alle Anwendungen längs eines einzigen Baums repräsentiert werden, was ermöglicht, direkt auf eine Anwendung zuzugreifen, indem einmal auf die Maus (S) geklickt wird.
